# EUROPEAN PATENT SPECIFICATION

(11) **EP 4 289 649 B1**
(45) Date of publication and mention of the grant of the patent: **04.09.2024**
(21) Application number: 22184908.6
(22) Date of filing: 14.07.2022
(51) Int. Cl.: B60K 7/00, B60K 1/04, B62D 59/04, B60K 17/04

(54) **MANEUVERING DRIVE SYSTEM AND VEHICLE**
RANGIERANTRIEBSSYSTEM UND FAHRZEUG
SYSTÈME DE PROPULSION DE MANOEUVRE ET VÉHICULE

(30) Priority: 10.06.2022 CN 202210651774
(43) Date of publication of application: 13.12.2023
(73) Proprietor: Carman Enterprise Co., Ltd., Yuhang District Hangzhou Zhejiang 311121 (CN)
(72) Inventor: Li, Xianwei, Hangzhou, 311121 (CN)
(74) Representative: Paul & Albrecht Patentanwälte PartG mbB

(56) References cited:
- EP-A1- 2 409 903
- EP-A2- 1 225 090
- DE-U1- 202009 005 524
- DE-U1- 202016 105 321
- US-A1- 2021 001 936
- US-B2- 8 915 317

## Description

The present invention relates to a maneuvering drive system for a vehicle, in particular for a vehicle without its own drive, preferably for a trailer, comprising at least two, in particular exactly two drive units, which are designed to be attached to a vehicle in order to drive a wheel of the vehicle, each drive unit comprising a rotatably mounted drive element, which is designed and arranged such that it can be brought into abutment with a wheel of the vehicle to drive the vehicle, an electrical drive motor, which is designed to set the drive element in rotation, and a battery, which is in particular designed to be rechargeable, for supplying the drive unit with electrical energy.

Furthermore, the present invention relates to a vehicle, in particular a vehicle without its own drive.

Vehicles without their own drive may, for example, be trailers such as caravans, boat trailers, horse trailers or the like. In the case of such vehicles, it is considered problematic that they can only be moved with difficulty by hand when they are not connected to the towing vehicle, for example a passenger car. In the case of a caravan trailer, for example, which has been disconnected from the car by which it was transported at a suitable point on a camp site, maneuvering by hand to the final parking position is very difficult.

In order to facilitate maneuvering in the disconnected state, maneuvering drive systems have been developed which can be mounted on a vehicle without its own drive. Such a maneuvering drive system usually comprises at least two drive units by means of which the wheels of the vehicle to be moved can be set in rotation. The drive units are mounted on the outside of a vehicle, usually in an area immediately in front of or behind the wheels which are to be driven by the drive units. The drive units each comprise on their front side a rotatable drive element, for example a friction wheel, which is brought into frictional contact with a wheel of the vehicle, so that rotation of the drive element causes rotation of the wheel of the vehicle. Each drive element is assigned an electrical drive motor, which is coupled to the drive element and is able to set the drive element into rotation.

If, in the case of a single-axle vehicle, such a drive unit is mounted in the area of each of the two wheels or, in the case of a two-axle or multi-axle vehicle, such a drive unit is mounted in the area of each wheel of at least one of the axles, the vehicle can be comfortable moved by a user using the drive units. Such maneuvering drive systems, in particular the drive units, normally are operated with a power supply at an electrical voltage of 12 V. Such an electrical voltage can be supplied by standard batteries. However, it is sometimes considered as disadvantageous that such a voltage requires a high electrical current which may lead to power losses in particular in the cables between the battery and the drive motor as the power loss is directly dependent from the electrical current.

EP 2 409 903 A1 discloses a maneuvering drive system comprising two drive units, which are designed to be attached to a vehicle in order to drive a wheel of the vehicle. Further maneuvering drive systems are disclosed in US 2021/0001936 A1, DE 20 2016 105 321 U1, US 8,915,317 B2 and DE 20 2009 005 524 U1.

Based on this prior art, it is an object of the present invention to provide an alternative maneuvering drive system, which in particular avoids the above-mentioned disadvantages.

This object is solved in a maneuvering drive system mentioned at the beginning in that the battery is designed to supply an electrical voltage for operation of the drive motor of 36 V.

Correspondingly, the object is also solved by a vehicle, in particular a vehicle without its own drive, comprising such a maneuvering drive system. The vehicle can be in particular a trailer, preferably a caravan, boat or horse trailer.

The idea is based on the consideration to provide a battery that delivers a voltage of 36 V and, correspondingly, to provide drive motors that can be operated at such an electrical voltage. In this way, it is possible to increase the output power of the motor and/or to design the drive units in a very space-saving way.

In concrete terms, the power loss in cables is dependent from the electrical current, the length of the cables and the specific resistance determined by the material of the cable. The power losses appear in all cables between the battery, a possible control device and the motor itself. As a higher electrical voltage leads to a reduced electrical current, the power losses are significantly reduced so that, at the same input power, the output power of the drive motor is significantly increased.

It has been proven in particular advantageous if the electrical voltage supplied by the battery and used for operation of the drive motor is 36 V. On one hand, such a voltage is not dangerous for the human body when a person comes accidentally into contact with a non-isolated component. On the other hand, such a voltage, which is three times the voltage at which common drive units operate, leads to a significant reduction of power losses. In addition, electronic parts such as cable, switches, connectors etc. can be adapted to a lower current specification, which is also an economic advantage. Also, a voltage of 36 V is easy to achieve by combining standard DC-batteries supplying a voltage of 12 V. Accordingly, it has been proven that a voltage of 36 V is optimized in particular in respect to safety, economic and efficiency issues.

Preferably, the drive motors are brushless motors. Brushless motors are characterized by a high power-to-weight ratio and low maintenance efforts. Normally, motors equipped with brushes have the tendency to break as the brushes are subjected to wearing. Furthermore, a brushless motor does not need a tolerance gap between the power brush, so it has per se a higher power efficiency. Due to the fact that no slipperings or commutators and no brushes are necessary, a brushless motor has less friction. Furthermore, at brushless motors, it is easier to monitor and control the rotation speed, which makes it easier to move a vehicle without its own drive in a straight line. The size and weight of a brushless motor is also smaller compared to a motor equipped with brushes having the same power. In particular, the combination of a brushless motor with a higher voltage of more than 12 V is advantageous, as the electrical current is reduced. Generally, high electrical currents often cannot be tolerated by a brushless motor due to demagnetization effects. Accordingly, the combination of providing a brushless motor at an increased voltage leads to a very space-saving, highly efficient and long service life functioning.

The electrical drive motors may have an internal rotor. Accordingly, the motors may be formed such that the stationary part (stator) of the motor encloses the moving part (rotor).

According to a further elaboration of the invention, the drive motors may comprise a rotor information detection device, in particular hall-sensors, in order to gain information about the position and/or the movement of the rotor. By means of such a rotor information detection device, it is possible to use information about the position and the movement of the rotor in order to make adaptions in the control of the motor. In particular, the rotating field of the motor can be adjusted dependent from the information gained by a rotor information detection device. Preferably, the rotor information detection device can be formed as or comprise at least one, in particular a plurality of hall-sensors, by means of which the position of the rotor can be determined exactly. The hall sensors may be distributed over the circumference, in particular equally distributed. Based on the information provided by the rotor information detection device, conclusions can be made on the rotational speed and the direction of rotation.

According to a preferred embodiment, each drive motor may define a motor axis, which extends transversally, in particular perpendicularly to the rotation axis of the drive element. Accordingly, the drive motor may be arranged such that its motor axis extends transversally, in particular perpendicularly with regard to the rotation axis of the drive element. When mounted to a vehicle, the rotation axis of the drive element extends normally parallel to the rotation axis of the wheel to be driven by the drive element. This means, that the motor axis may extend in the longitudinal direction of the vehicle to be driven. In this way, a very simple design of the drive unit is possible.

In concrete terms, the drive unit may comprise a central support element on which the drive element is mounted rotatably. This central support element may have a C- or E-shape, wherein the drive element is mounted between two legs of the C- or E-shaped central support element. Accordingly, the drive motor may be connected to a central base section of the central support element, in particular may be flanged thereto. Such a central support element allows a space-saving design and a fast assembly of the drive unit.

According to a preferred elaboration of the invention, the motor may comprise a motor shaft, which is coupled to the drive element by means of a gear device. Such a gear device allows a suitable transmission ratio between the speed of rotation of the motor shaft and the desired speed of rotation of the drive element.

Preferably, the gear device comprises a worm gear pair. By means of a such a worm gear pair, high transmission ratios can be achieved. In particular, it is possible that the motor rotates at a high speed delivering only a low momentum, which is converted into a low speed and a high momentum of the driving element, that is used to drive the wheel of a vehicle. A worm gear pair is characterized in that it comprises a worm, which is in the form of a screw, and a worm wheel, which is in engagement with the worm screw. An important advantage of a worm gear pair is that it has a self-locking effect. Accordingly, it is possible that the worm screw drives the worm wheel, but it is excluded, that the worm wheel can drive the worm screw. Contrary to classical spur gears, an electronic magnetic break need not be provided in a worm gear pair. Furthermore, the noise level is reduced.

In concrete terms, a worm screw of the worm gear pair may be connected to the motor shaft in a rotationally fixed manner or formed in a single piece design with the motor shaft. Accordingly, a high rotation speed of the motor is converted in a low speed of the worm wheel, wherein the motor can be designed such that it delivers only a low momentum which is converted into a high momentum of the worm wheel.

In a further elaboration of this embodiment, the gear device may comprise an intermediate shaft, which is mounted rotatably and which carries a worm wheel being in engagement with the worm shaft and a gear wheel in a rotationally fixed manner. Accordingly, it is provided that the worm wheel being in engagement with the worm shaft is not directly connected to the drive element in a rotationally fixed manner. Moreover, it may be provided that an intermediate shaft is held rotatably, in particular on a central support element, which intermediate shaft carries the worm wheel and a further gear wheel in a rotationally fixed manner to each other. Accordingly, a further gear stage may be provided.

In concrete terms, the gear device may comprise a spur gear stage. Such a further spur gear stage in addition to a worm gear pair may increase the transmission ratio of the gear device in total. Preferably, the spur gear stage as well as the worm gear pair may be arranged between two legs of the central support element. In particular, the gear device may be surrounded completely by the central support element and further cover elements in order to protect the gear device against external influences and to bring the different wheels of the gear device into contact with lubricant.

The spur gear stage may be formed such that the gear wheel of the intermediate shaft is in direct or indirect engagement with an output side gear wheel, which is fixed in a rotationally fixed manner to the drive element. In other words, the gear wheel of the intermediate shaft may be coupled to the drive element directly or indirectly. Preferably, the spur gear stage comprises an intermediate gear wheel held rotatably and arranged between the gear wheel on the intermediate shaft and the output side gear wheel. This embodiment is based on the consideration to realize an indirect coupling between the intermediate shaft and the drive element. In order to increase the transmission ratio, the number of teeth of the output side gear wheel can be higher than the number of teeth of the gear wheel of the intermediate shaft. In particular, the number of teeth of the output side gear wheel can be at least 2 times, in particular at least 2.5 times, preferably at least 3 times the number of teeth of the gear wheel of the intermediate shaft. In this way, the momentum which can be applied to the wheel, is increased, whereas the rotation speed of the drive element is reduced compared to the intermediate shaft.

Each drive unit may comprise a housing, which is in particular weather-resistant and/or watertight, wherein said housing surrounds at least the drive motor and accommodates the battery.

Each drive unit may comprise a control device in particular having a communication module, which control device is fixed to or integrated into the drive unit. A control device is used to regulate the rotation of the drive motor. A communication module can be arranged such that it is able to communicate with a remote control unit connected by cable or by wireless connection. The control device may be arranged directly adjacent to the battery so that the cables between the battery and the control device are short, which keeps the power losses in these cables low. The rotor information detection device may be connected to the control device.

According to a preferred embodiment, a polarity control unit may be integrated into the control device, wherein the polarity control unit is designed to regulate the direction and speed of rotation of the drive motor by changing the polarity. Preferably, the control device and the battery are integrated in one common housing. Consequently, the control device in particular comprising a polarity control unit and the battery can form an integrated unit in the drive unit, wherein they may be arranged in one common housing.

The maneuvering drive system may be arranged such that one remote control unit is able to communicate with a plurality of drive units at the same time. Accordingly, a direct communication path can be established between one remote control unit and the control devices of all, in particular both drive units. Such an arrangement leads to only a low delay during communication. However, such an arrangement is more complex for maintenance and problem tracking as the control devices of both drive units have their own receiving and controlling parts.

Alternatively, the control device of one drive unit may be formed as a master control device, which is able to communicate with a remote control unit, and the control device(s) of the other drive units is/are formed as slave control device(s) so that it is/they are able to communicate with the master control device in order to get instructions from the latter. In other words, the control device of one drive unit serves as a master control device and the control device of the other drive unit serves as a slave device. Accordingly, a communication signal from a remote control unit is at first transmitted to the master control device and from the master control device to the slave device/ devices. This design allows to use a Bluetooth connection between the remote control unit and the master control device. The maneuvering drive system may comprise a remote control unit which is able to communicate with one or a plurality of control devices of drive units.

In addition, an infeed device may be assigned to each drive unit, wherein the infeed device can bring the drive unit into a frictional and driving contact between its drive element and the wheel of the vehicle to be driven, in particular by a guided linear or pivoting movement. By means of such an infeed device, it is possible that the maneuvering drive system remains permanently at the vehicle to be driven. Accordingly, the drive elements are only brought in contact with the corresponding wheel of the vehicle to be driven, when the vehicle should be moved. If the vehicle to be driven, for example a trailer, is connected to a passenger car and moved, the drive elements can be brought out of engagement from the wheel of the vehicle.

Preferably, the infeed device comprises an infeed motor by means of which the infeed movement can be carried out in a motorized manner. In order to control the infeed device, the infeed motor can be connected to the control device associated with the respective drive unit. The infeed motor may be supplied by the battery. Accordingly, the infeed motor may be able to be operated at an electrical voltage of more than 12 V, in particular at an electrical voltage of 24, 36 or 48 V.

In order to protect the infeed motor against external influences, in particular against dirt and dust, the infeed device may comprise a weather-resistant and/or watertight infeed housing, which surrounds at least the infeed motor.

Further features and advantages of the present invention will become clear by the following description of an embodiment of a maneuvering drive system according to the invention with reference to the enclosed drawing. In the drawing shows:
- Figure 1: a caravan trailer with a mounted maneuvering drive system according to the invention in a perspective view;

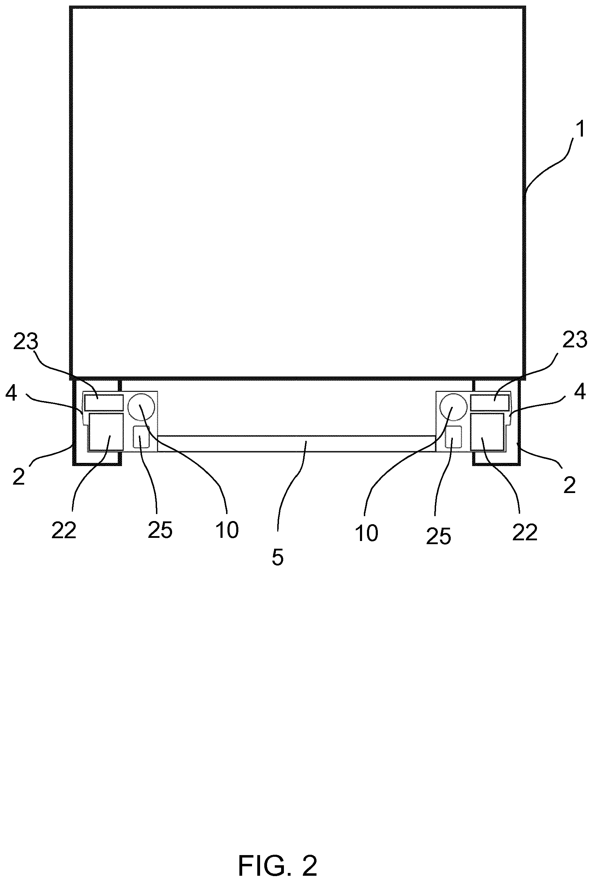

- Figure 2: the caravan trailer of figure 1 in a rear schematical view;
- Figure 3: a drive unit of the maneuvering drive system according to the invention in a perspective view;
- Figure 4: the drive unit of figure 3 in another perspective view without housing, and
- Figure 5: the drive unit shown in figure 4 without housing in another perspective view.

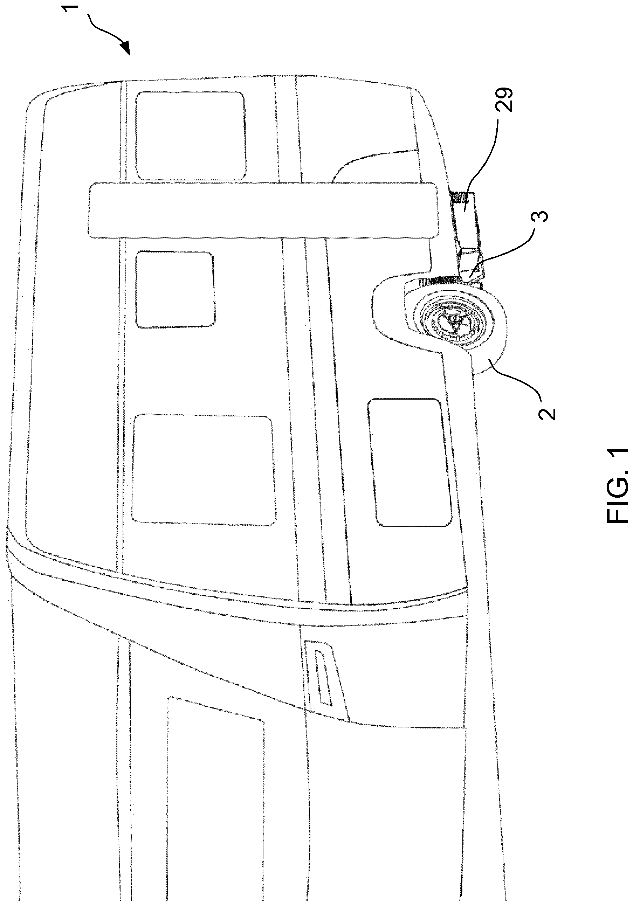

Figure 1 shows a part of a single-axle caravan trailer 1 having two wheels 2 on opposite lateral sides. At its front end, the caravan trailer 1 comprises a coupling device (not visible) in order to attach the trailer 1 to the trailer hitch of a vehicle. The caravan trailer 1 does not have its own drive and, when it is not connected to a passenger car serving as a towing vehicle, can hardly be moved by hand, in particular can hardly be maneuvered. Therefore, the caravan trailer 1 is equipped with an maneuvering drive system 3 according to the invention.

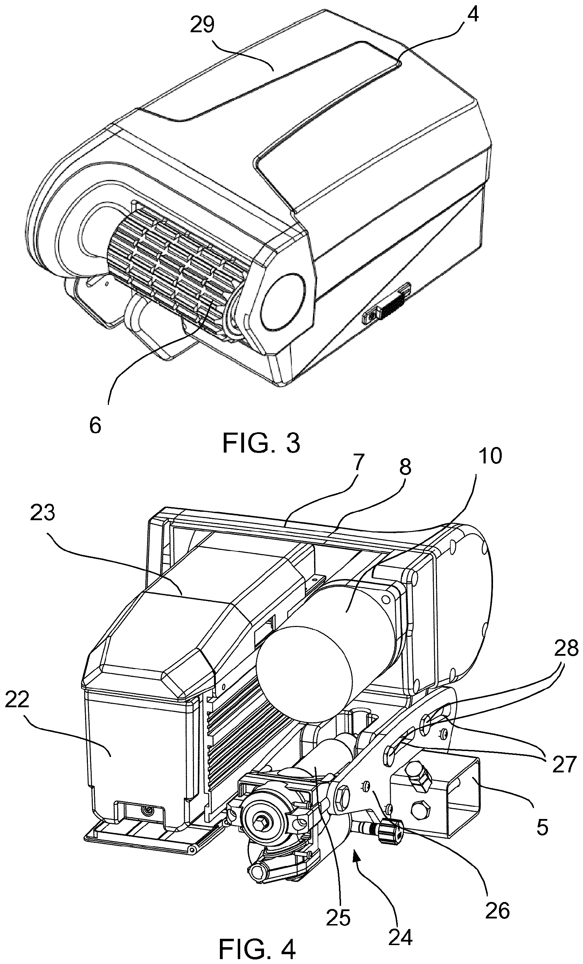

The maneuvering drive system 3 comprises exactly two drive units 4, which are shown more in detail in figures 3 to 5. The drive units 4 are attached to a square tube 5, which connects the two drive units 4 and which is attached to the caravan trailer 1 by means of suitable clamping elements (not visible). The length of the square tube 5 is chosen such that each drive unit 4 is arranged directly behind a wheel 2 of the caravan trailer 1.

By means of the two drive units 4, the wheels 2 of the caravan trailer 1 can be driven and, consequently, the caravan trailer 1 can be moved, in particular maneuvered, without a towing vehicle. For this purpose, each of the drive units 4 comprises a rotatably mounted drive element, specifically a friction roller 6, which is designed and arranged such that it can be brought into abutment with a wheel 2 of the caravan trailer 1 in order to drive the latter. The friction roller 6 has a basically cylindrical shape and comprises in its outer circumference several grooves extending in the longitudinal direction of the friction roller 6.

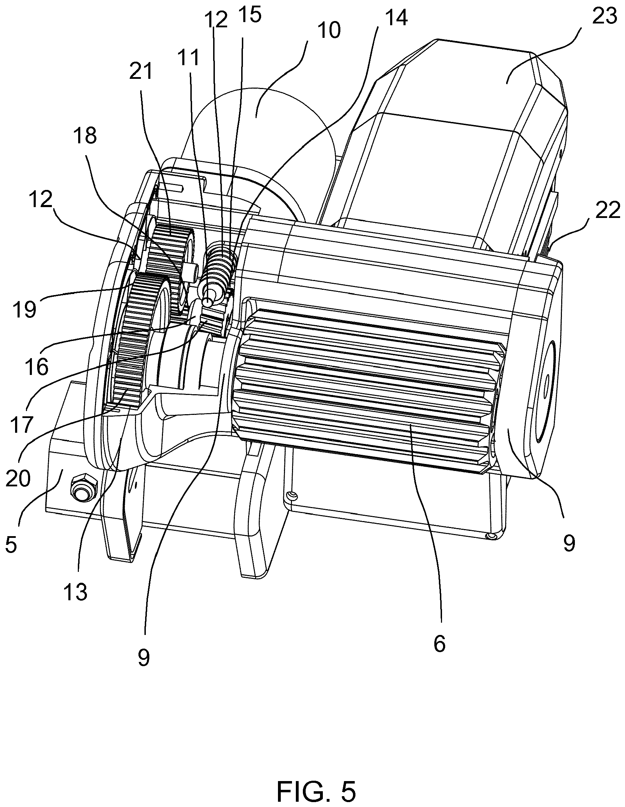

As it is in particular visible in figure 5, each drive unit 4 comprises a central support element 7 having a base section 8 extending parallel to the rotation axis of the friction roller 6 and two legs 9 projecting frontwards from the base section 8. The friction roller 6 is mounted rotatably between the two legs 9.

Furthermore, each drive unit 4 comprises an electrical brushless drive motor 10, which is flanged to the base section 8. Each electrical drive motor 10 comprises a motor shaft 11, which is coupled to the friction roller 6 by means of a gear device. This gear device 12 is arranged inside a corresponding gear housing 13 and located next to the friction roller 6 on the opposite side of the leg 9 shown on the left side in figure 5. In concrete terms, the gear device 12 comprises a worm gear pair 14. In this way, a high transmission ratio can be achieved. A worm screw 15 of the worm gear pair 14 is connected to the motor shaft 11 in a rotationally fixed manner.

The gear device 12 further comprises an intermediate shaft 16, which is mounted rotatably with respect to the gear housing 13 and which carries a worm wheel 17 being in engagement with the worm screw 15. The intermediate shaft 16 also carries a gear wheel 18, wherein the gear wheel 18 and the worm wheel 17 are mounted together via the intermediate shaft 16 in a rotationally fixed manner.

In order to further increase the transmission ratio, the gear device 12 also has a spur gear stage 19. The spur gear stage 19 is formed such that the gear wheel 18 of the intermediate shaft 16 is in indirect engagement with an output side gear wheel 20, which is fixed in a rotationally fixed manner to the friction roller 6. In concrete terms, the spur gear stage comprises an intermediate gear wheel 21 held rotatably on the left side of the gear housing 13 (in figure 5) and arranged between the gear wheel 18 on the intermediate shaft 16 and the output side gear wheel 20. As it is visible in figures 4 and 5, due to the configuration of the gear device 12, the motor axis X defined by the motor shaft 11 extends perpendicularly to the rotation axis of the friction roller 6.

Each drive unit further comprises a battery 22, which is designed to be rechargeable, for supplying the drive unit 4 with electrical energy. The battery 22 is designed to supply an electrical voltage for operation of the drive motor 10 of 36 V. Accordingly, the drive motor 10 is designed to be operated at such a voltage. As it is visible in figure 4, the battery 22 is mounted to the central support element 7 from a rear side.

On the top of the battery 22, a control device 23 is arranged. This control device is also fixed to the central support element 7 and is used to regulate the rotation of the drive motor 10. Furthermore, a communication module is provided which is able to communicate with a remote control unit connected by wireless connection. Furthermore, the communication module is designed such that the control devices 23 of both drive units 4 can communicate to each other in order to ensure a synchronous rotation of the drive motors 10 of both drive units 4.

In addition, an infeed device 24 is assigned to each drive unit 4. The infeed device 24 is designed such that it can bring the drive unit 4 into a frictional and driving contact between its friction roller and the wheel 2 of the caravan trailer 1. In concrete terms, the infeed device 24 comprises an infeed motor 25, by means of which the infeed movement can be carried out in a motorized manner. The infeed motor 25, which is also designed to be operated at a voltage of 36 V and supplied by the battery 22, is attached to a base plate 26, which is fixed, in particular welded to the square tube 5 and extends perpendicularly to the longitudinal direction of the square tube 5. The drive unit 4 can be moved relative to the base plate 6 and is guided by means of oblong holes 27 formed in the base plate 26. Corresponding guiding bolts 28 extend through these oblong holes 27. In this way, the infeed movement of the drive unit 4 is guided with respect to the square tube 5, which itself is fixed to the caravan trailer 1.

As it is visible on figure 3, each drive unit 4 also comprises a housing 29, which is weather-resistant and watertight. The housing 29 is attached to the central support element 7 and surrounds the drive motor 10, the battery 22, the control device 23 and the infeed motor 25. In this way, these elements are protected against water and dirt. The batteries 22 can be arranged inside the housing such that they are exchangeable. In other words, a mechanism can be provided which allows to replace the battery 22. Furthermore, a charging connection can be provided on the housing 29 in order to charge the battery 22 from outside. Such a charging connection may comprise two charging poles.

Because the drive motor 10 is brushlessand the momentum is transmitted at a high transmission ratio due to the worm gear pair, the design is very space-saving, so that high momentums can be transferred from the friction roller 6 to the wheel 2 of the caravan trailer 1. Due to the worm gear pair, an additional break in the motor 10 is not necessary. In addition, due to the high voltage, the current is reduced so that power losses in the cables between the battery and the motors are reduced as well, which increases the efficiency of the maneuvering drive system 3 and avoids demagnetization effects in the brushless drive motor 10.

### List of reference numbers

| | | | |
|---|---|---|---|
| 1 | caravan trailer | 29 | housing |
| 2 | wheel | | |
| 3 | maneuvering drive system | | |
| 4 | drive unit | | |
| 5 | square tube | | |
| 6 | friction roller | | |
| 7 | central support element | | |
| 8 | base section | | |
| 9 | leg | | |
| 10 | drive motor | | |
| 11 | motor shaft | | |
| 12 | gear device | | |
| 13 | gear housing | | |
| 14 | worm gear pair | | |
| 15 | worm screw | | |
| 16 | intermediate shaft | | |
| 17 | worm wheel | | |
| 18 | gear wheel | | |
| 19 | spur gear stage | | |
| 20 | output side gear wheel | | |
| 21 | intermediate gear wheel | | |
| 22 | battery | | |
| 23 | control device | | |
| 24 | infeed device | | |
| 25 | infeed motor | | |
| 26 | base plate | | |
| 27 | oblong hole | | |
| 28 | guiding bolt | | |

## Claims

1. Maneuvering drive system (3) for a vehicle, in particular for a vehicle without its own drive, preferably for a trailer, comprising at least two, in particular exactly two drive units (4), which are designed to be attached to a vehicle in order to drive a wheel (2) of the vehicle, each drive unit (4) comprising
a rotatably mounted drive element which is designed and arranged such that it can be brought into abutment with a wheel (2) of the vehicle to drive the vehicle,
an electrical drive motor (10), which is designed to set the drive element in rotation,
a battery (22), which is in particular designed to be rechargeable, for supplying the drive unit (4) with electrical energy,
**characterised in that**
the battery (22) is designed to supply an electrical voltage for operation of the drive motor (10) of 36 V.

2. Maneuvering drive system (3) according to claim 1, **characterized in that** the drive motor (10) is a brushless motor, and/or **in that** the drive motor (10) has an internal rotor, and/or **in that** the drive motors (10) comprise a rotor information detection device, in particular hall-sensors, in order to gain information about the position and/or the movement of the rotor.

3. Maneuvering drive system (3) according to any of the preceding claims, **characterized in that** each drive motor (10) defines a motor axis, which extends transversally, in particular perpendicularly to the rotation axis of the drive element.

4. Maneuvering drive system (3) according to any of the preceding claims, **characterized in that** the drive motor (10) comprises a motor shaft (11), which is coupled to the drive element by means of a gear device (12).

5. Maneuvering drive system (3) according to claim 4, **characterized in that** the gear device (12) comprises a worm gear pair (14).

6. Maneuvering drive system (3) according to claim 5, **characterized in that** a worm screw (15) of the worm gear pair (14) is connected to the motor shaft (11) in a rotationally fixed manner or formed in a single piece design with the motor shaft (11).

7. Maneuvering drive system (3) according to claim 6, **characterized in that** the gear device (12) comprises an intermediate shaft (16), which is mounted rotatably and which carries a worm wheel (17) being in engagement with the worm screw (15) and a gear wheel (18) in a rotationally fixed manner.

8. Maneuvering drive system (3) according to any of the preceding claims, **characterized in that** each drive unit (4) comprises a control device (23) in particular having a communication module, which control device is fixed to or integrated into the drive unit (4), wherein, in particular, the control device (23) is directly connected to the battery (22).

9. Maneuvering drive system (3) according to claim 8, **characterized in that** a polarity control unit is integrated into the control device (23), wherein the polarity control unit is designed to regulate the direction and speed of rotation of the drive motor by changing the polarity.

10. Maneuvering drive system (3) according to claim 8 or 9, **characterized in that** the control device (23) and the battery (22) are integrated into one common housing.

11. Maneuvering drive system (3) according to any of claims 8 to 10, **characterized in that** the control device (23) of one drive unit (4) is formed as a master control device, which is able to communicate with a remote control unit, and the control device(s) (23) of the other drive unit(s) (4) is/are formed as slave control device(s) so that it is/they are able to communicate with the master control device in order to get instructions from the latter.

12. Maneuvering drive system (3) according to any of the preceding claims, **characterized in that** an infeed device (24) is assigned to each drive unit (4), wherein the infeed device (24) can bring the drive unit (4) into a frictional and driving contact between its drive element and the wheel (2) of the vehicle to be driven, in particular by a guided linear or pivoting movement.

13. Maneuvering drive system (3) according to claim 12, **characterized in that** the infeed device (24) comprises an infeed motor (25) by means of which the infeed movement can be carried out in a motorized manner, wherein, in particular, the infeed motor (25) is able to be operated at the voltage supplied by the battery (22), and/or **in that** the infeed device (24), in particular the infeed motor (25), is connected to the control device (23) associated with the respective drive unit (4), and/or **in that** the infeed device (24) comprises a weather-resistant and/or watertight infeed housing (29), which surrounds at least the infeed motor (25).

14. Vehicle, in particular vehicle without its own drive, comprising a maneuvering drive system (3) according to any of the claims 1 to 13.

## Patentansprüche

1. Rangierantriebssystem (3) für ein Fahrzeug, insbesondere für ein Fahrzeug ohne eigenen Antrieb, vorzugsweise für einen Anhänger, mit mindestens zwei, insbesondere genau zwei Antriebseinheiten (4), die dazu ausgebildet sind, an einem Fahrzeug angebracht zu werden, um ein Rad (2) des Fahrzeugs anzutreiben, wobei jede Antriebseinheit (4) umfasst
ein drehbar gelagertes Antriebselement, das so gestaltet und angeordnet ist, dass es mit einem Rad (2) des Fahrzeugs in Anlage gebracht werden kann, um das Fahrzeug anzutreiben,
einem elektrischen Antriebsmotor (10), der dazu dient, das Antriebselement in Drehung zu versetzen,
eine insbesondere wiederaufladbar ausgebildete Batterie (22) zur Versorgung der Antriebseinheit (4) mit elektrischer Energie,
**dadurch gekennzeichnet, dass** die Batterie (22) dafür ausgelegt ist, eine elektrische Spannung für den Betrieb des Antriebsmotors (10) von 36 V zu liefern.

2. Rangierantriebssystem (3) nach Anspruch 1, **dadurch gekennzeichnet, dass** der Antriebsmotor (10) ein bürstenloser Motor ist, und/oder **dass** der Antriebsmotor (10) einen Innenrotor aufweist, und/oder **dass** die Antriebsmotoren (10) eine Rotorinformationserfassungseinrichtung, insbesondere Hallsensoren, umfassen, um Informationen über die Position und/oder die Bewegung des Rotors zu gewinnen.

3. Rangierantriebssystem (3) nach einem der vorhergehenden Ansprüche, **dadurch gekennzeichnet, dass** jeder Antriebsmotor (10) eine Motorachse definiert, die quer, insbesondere senkrecht zur Drehachse des Antriebselements verläuft.

4. Rangierantriebssystem (3) nach einem der vorhergehenden Ansprüche, **dadurch gekennzeichnet, dass** der Antriebsmotor (10) eine Motorwelle (11) aufweist, die über eine Getriebevorrichtung (12) mit dem Antriebselement gekoppelt ist.

5. Rangierantriebssystem (3) nach Anspruch 4, **dadurch gekennzeichnet, dass** die Getriebevorrichtung (12) ein Schneckenradpaar (14) umfasst.

6. Rangierantriebssystem (3) nach Anspruch 5, **dadurch gekennzeichnet, dass** eine Schnecke (15) des Schneckenradpaares (14) mit der Motorwelle (11) drehfest verbunden oder einstückig mit der Motorwelle (11) ausgebildet ist.

7. Rangierantriebssystem (3) nach Anspruch 6, **dadurch gekennzeichnet, dass** die Getriebevorrichtung (12) eine drehbar gelagerte Zwischenwelle (16) umfasst, die ein mit der Schnecke (15) in Eingriff stehendes Schneckenrad (17) und ein Zahnrad (18) drehfest trägt.

8. Rangierantriebssystem (3) nach einem der vorhergehenden Ansprüche, **dadurch gekennzeichnet, dass** jede Antriebseinheit (4) eine an der Antriebseinheit (4) befestigte oder in die Antriebseinheit (4) integrierte Steuereinrichtung (23), insbesondere mit einem Kommunikationsmodul, umfasst, wobei die Steuereinrichtung (23) insbesondere direkt mit der Batterie (22) verbunden ist.

9. Rangierantriebssystem (3) nach Anspruch 8, **dadurch gekennzeichnet, dass** in die Steuereinrichtung (23) eine Polaritätssteuereinheit integriert ist, wobei die Polaritätssteuereinheit dazu ausgebildet ist, die Drehrichtung und Drehzahl des Antriebsmotors durch Änderung der Polarität zu regeln.

10. Rangierantriebssystem (3) nach Anspruch 8 oder 9, **dadurch gekennzeichnet, dass** das Steuergerät (23) und die Batterie (22) in einem gemeinsamen Gehäuse integriert sind.

11. Rangierantriebssystem (3) nach einem der Ansprüche 8 bis 10, **dadurch gekennzeichnet, dass** die Steuereinrichtung (23) der einen Antriebseinheit (4) als Master-Steuereinrichtung ausgebildet ist, die mit einer Fernsteuereinrichtung kommunizieren kann, und die Steuereinrichtung(en) (23) der anderen Antriebseinheit(en) (4) als Slave-Steuereinrichtung(en) ausgebildet ist/sind, so dass sie mit der Master-Steuereinrichtung kommunizieren kann/können, um von dieser Anweisungen zu erhalten.

12. Rangierantriebssystem (3) nach einem der vorhergehenden Ansprüche, **dadurch gekennzeichnet, dass** jeder Antriebseinheit (4) eine Zustelleinrichtung (24) zugeordnet ist, wobei die Zustelleinrichtung (24) die Antriebseinheit (4) zwischen ihrem Antriebselement und dem Rad (2) des anzutreibenden Fahrzeugs, insbesondere durch eine geführte Linear- oder Schwenkbewegung, in einen Reib- und Antriebskontakt bringen kann.

13. Rangierantriebssystem (3) nach Anspruch 12, **dadurch gekennzeichnet, dass** die Zustelleinrichtung (24) einen Zustellmotor (25) umfasst, mittels dessen die Zustellbewegung motorisch durchführbar ist, wobei insbesondere der Zustellmotor (25) mit der von der Batterie (22) gelieferten Spannung betreibbar ist, und/oder **dass** die Zustelleinrichtung (24), insbesondere der Zustellmotor (25), mit der der jeweiligen Antriebseinheit (4) zugeordneten Steuereinrichtung (23) verbunden ist, und/oder **dass** die Zustelleinrichtung (24) ein witterungsbeständiges und/oder wasserdichtes Zustellgehäuse (29) umfasst, das zumindest den Zustellmotor (25) umgibt.

14. Fahrzeug, insbesondere Fahrzeug ohne eigenen Antrieb, mit einem Rangierantriebssystem (3) nach einem der Ansprüche 1 bis 13.

## Revendications

1. Système d'entraînement de manoeuvre (3) pour un véhicule, en particulier pour un véhicule sans entraînement propre, de préférence pour une remorque, comprenant au moins deux, en particulier exactement deux unités d'entraînement (4), qui sont conçues pour être fixées à un véhicule afin d'entraîner une roue (2) du véhicule, chaque unité d'entraînement (4) comprenant
un élément d'entraînement monté rotatif, conçu et disposé de manière à pouvoir être mis en contact avec une roue (2) du véhicule pour entraîner ce dernier,
un moteur d'entraînement électrique (10), conçu pour mettre l'élément d'entraînement en rotation,
une batterie (22), notamment conçue pour être rechargeable, destinée à alimenter l'unité entainement (4) en énergie électrique,
charactérisé en ce que la batterie (22) est conçue pour fournir une tension électrique de 36 V pour le fonctionnement du moteur d'entraînement (10).

2. Système d'entraînement de manoeuvre (3) selon la revendication 1, **caractérisé par le fait que** le moteur d'entraînement (10) est un moteur sans balais, et/ou **par le fait que** le moteur d'entraînement (10) a un rotor interne, et/ou par **le fait que** le moteur d'entraînement (10) comprends un dispositif de détection d'informations sur le rotor, en particulier des capteurs à effet Hall, afin d'obtenir des informations sur la position et/ou le mouvement du rotor.

3. Système d'entraînement de manoeuvre (3) selon l'une quelconque des revendications précédentes, **caractérisé en ce que** chaque moteur d'entraînement (10) définit un axe moteur qui s'étend transversalement, en particulier perpendiculairement à l'axe de rotation de l'élément d'entraînement.

4. Système d'entraînement de manoeuvre (3) selon l'une quelconque des revendications précédentes, **caractérisé par le fait que** le moteur d'entraînement (10) comprend un arbre moteur (11), qui est couplé à l'élément d'entraînement au moyen d'un dispositif d'engrenage (12).

5. Système d'entraînement de manoeuvre (3) selon la revendication 4, **caractérisé par le fait que** le dispositif d'engrenage (12) comprend une paire d'engrenages à vis sans fin (14).

6. Système d'entraînement de manoeuvre (3) selon la revendication 5, **caractérisé en ce qu**'une vis sans fin (15) de la paire d'engrenages à vis sans fin (14) est reliée à l'arbre moteur (11) de manière fixe en rotation ou formée d'une seule pièce avec l'arbre moteur (11).

7. Système d'entraînement de manoeuvre (3) selon la revendication 6, **caractérisé en ce que** le dispositif d'engrenage (12) comprend un arbre intermédiaire (16), qui est monté rotatif et qui porte une roue à vis sans fin (17) en prise avec la vis sans fin (15) et une roue d'engrenage (18) de manière fixe en rotation.

8. Système d'entraînement de manoeuvre (3) selon l'une quelconque des revendications précédentes, **caractérisé en ce que** chaque unité d'entraînement (4) comprend un dispositif de commande (23) comportant notamment un module de communication, lequel dispositif de commande est fixé ou intégré à l'unité d'entraînement (4), dans lequel, en particulier, le dispositif de commande (23) est directement connecté à la batterie (22).

9. Système d'entraînement de manoeuvre (3) selon la revendication 8, **caractérisé en ce qu**'une unité de contrôle de la polarité est intégrée dans le dispositif de commande (23), l'unité de contrôle de la polarité étant conçue pour réguler le sens et la vitesse de rotation du moteur d'entraînement en modifiant la polarité.

10. Système d'entraînement à la manoeuvre (3) selon la revendication 8 ou 9, **caractérisé par le fait que** le dispositif de commande (23) et la batterie (22) sont intégrés dans un boîtier commun.

11. Système d'entraînement de manoeuvre (3) selon l'une des revendications 8 à 10, **caractérisé par le fait que** le dispositif de commande (23) d'une unité d'entraînement (4) est formé comme un dispositif de commande maître, capable de communiquer avec une unité de commande à distance, et que le(s) dispositif(s) de commande (23) des autres unités d'entraînement (4) est/sont formé(s) comme dispositif(s) de commande esclave(s) de sorte qu'il(s) est/sont capable(s) de communiquer avec le dispositif de commande maître afin d'obtenir des instructions de ce dernier.

12. Système d'entraînement de manoeuvre (3) selon l'une quelconque des revendications précédentes, **caractérisé en ce qu'**un dispositif d'alimentation (24) est affecté à chaque unité d'entraînement (4), dans lequel le dispositif d'alimentation (24) peut amener l'unité d'entraînement (4) dans un contact de frottement et d'entraînement entre son élément d'entraînement et la roue (2) du véhicule à entraîner, en particulier par un mouvement linéaire ou de pivotement guidé.

13. Système d'entraînement de manoeuvre (3) selon la revendication 12, **caractérisé en ce que** le dispositif d'alimentation (24) comprend un moteur d'alimentation (25) au moyen duquel le mouvement d'alimentation peut être effectué de manière motorisée, dans lequel, en particulier, le moteur d'alimentation (25) est capable de fonctionner à la tension fournie par la batterie (22), et/ou **que le** dispositif d'alimentation (24), en particulier le moteur d'alimentation (25), est connecté au dispositif de commande (23) associé à l'unité d'entraînement respective (4), et/ou **que** le dispositif d'alimentation (24) comprend un boîtier d'alimentation (29) résistant aux intempéries et/ou étanche, qui entoure au moins le moteur d'alimentation (25).

14. Véhicule, en particulier véhicule sans entraînement propre, comprenant un système d'entraînement de manoeuvre (3) selon l'une quelconque des revendications 1 à 13.
